# FASCICULE DE BREVET EUROPEEN

(11) **EP 2 394 474 B1**
(45) Date de publication et mention de la délivrance du brevet: **26.12.2012**
(21) Numéro de dépôt: 10701695.8
(22) Date de dépôt: 01.02.2010
(51) Int. Cl.: H04W 56/00

(54) **PROCEDE D'EMISSION DANS UN RESEAU SANS FIL ET PROCEDE DE RECEPTION CORRESPONDANT**
ÜBERTRAGUNGSVERFAHREN FÜR EIN DRAHTLOSES NETZWERK UND ENTSPRECHENDES EMPFANGSVERFAHREN
TRANSMISSION METHOD IN A WIRELESS NETWORK AND CORRESPONDING RECEPTION METHOD

(30) Priorité: 06.02.2009 FR 0950741
(43) Date de publication de la demande: 14.12.2011
(73) Titulaire: Thomson Licensing, 92130 Issy-les-Moulineaux (FR)
(72) Inventeur: GUILLOUARD, Samuel, F-35135 Chantepie (FR); FONTAINE, Patrick, F-35200 Rennes (FR); GUGUEN, Charline, F-35230 Bourgbarre (FR)
(74) Mandataire: Perrot, Sébastien
(86) Numéro de dépôt international: PCT/EP2010/051186
(87) Numéro de publication internationale: WO 2010/089277

(56) Documents cités:
- FR-A- 2 864 414
- US-A1- 2006 153 147

## Description

### 1. Domaine de l'invention.

L'invention se rapporte au domaine des télécommunications et plus précisément à l'émission et à la réception de signaux sans fil dans un système comprenant plusieurs stations de base diffusant des données de façon synchrone et à une même fréquence et au moins un terminal mobile, chaque terminal mobile émettant des mêmes signaux à destination des stations de base.

### 2. Etat de l'art.

Selon l'état de la technique, certains réseaux cellulaires, par exemple du type GSM (de l'anglais «Global System for Mobile communication » ou en français « Système global pour communication mobile »), du type PDC (de l'anglais « Personal Digital Cellular » ou en français « Réseau cellulaire numérique personnel ») utilisent une méthode d'accès au canal de type TDMA (de l'anglais « Time Division Multiple Access » ou en français « Accès multiple à répartition dans le temps »), permettant ainsi à plusieurs utilisateurs de partager un même canal de fréquence dans une cellule en divisant le signal en différents intervalles de temps (ou « time slots » en anglais). Cependant, chaque cellule étant entourée de six cellules voisines, des problèmes d'interférences apparaissent au niveau des zones de recouvrement entre plusieurs cellules. Pour pallier ce problème d'interférences, une solution consiste à associer une fréquence différente à chacune des cellules adjacentes afin d'éviter tout recouvrement de fréquences. Lorsqu'un terminal mobile évolue d'une cellule à une autre, le réseau doit alors mettre en place un processus dit de « handover » (ou transfert automatique intercellulaire en français) pour éviter toute interruption de service au niveau du terminal mobile lors de son passage d'une cellule à une autre. Lors de ce « handover », un nouveau canal physique est attribué au terminal mobile par le réseau, chaque terminal mobile communiquant avec une seule station de base à la fois via un canal physique particulier (caractérisé par exemple par un canal de fréquence).

Par ailleurs, une cellule d'un réseau cellulaire peut atteindre un rayon de quelques dizaines de kilomètres, par exemple 35 km dans le système GSM. Deux terminaux mobiles associés à la station de base couvrant la cellule peuvent donc subir chacun des délais de propagation différents et non négligeables. Dans le contexte TDMA, il y a un risque que deux terminaux mobiles utilisant deux intervalles consécutifs envoient des salves (ou « burst » en anglais) qui se chevauchent au niveau de la station de base. Une solution consiste à synchroniser l'émission de salves par chaque terminal mobile avec la station de base associée pour éviter la collision des salves émises au niveau de la station de base. Cette synchronisation est réalisée par l'émission de commandes TA (de l'anglais « Timing Advance » ou en français « Avance de synchronisation »), par la station de base associée aux terminaux mobiles, qui instruisent chaque terminal mobile pour qu'il émette en avance d'une durée dont la valeur est déterminée par le réseau. Chaque terminal mobile étant associé à une unique station de base, cette opération de synchronisation est à répéter lors de tout changement de cellule et donc de station de base associée.

### 3. Résumé de l'invention.

L'invention a pour but de pallier à au moins un de ces inconvénients de l'art antérieur.

Plus particulièrement, l'invention a notamment pour objectif d'optimiser la synchronisation temporelle d'un (ou plusieurs) terminal mobile avec plusieurs stations de base dans un réseau sans fil.

L'invention concerne un procédé d'émission dans un réseau sans fil, le réseau comprenant une pluralité de stations de base et au moins un terminal mobile, au moins un même premier signal étant émis par un terminal mobile à destination de la pluralité de stations de base. Le procédé comprend une étape d'émission d'une information représentative d'un premier décalage temporel à destination du terminal mobile, le premier décalage étant fonction d'au moins une heure de réception du au moins un même premier signal par au moins une station de base.

Selon une caractéristique particulière, le premier décalage est fonction d'au moins deux heures de réception du au moins un premier signal par au moins deux stations de base.

Avantageusement, le premier décalage est fonction de la différence entre la au moins une heure de réception du au moins un premier signal par la au moins une station de base et une heure de référence, le premier décalage étant à appliquer à une émission d'au moins un même deuxième signal par le terminal mobile à destination de la pluralité de stations de base.

Selon une autre caractéristique, le premier décalage est fonction d'au moins un premier paramètre appartenant au groupe comprenant :
- une puissance de signal reçu par au moins une station de base de ladite pluralité ;
- une qualité de liaison entre au moins une station de base de ladite pluralité et le terminal mobile ; et
- un débit disponible d'au moins une station de base de ladite pluralité.

Avantageusement, le procédé comprend une étape d'élection d'au moins une station de base de référence pour le terminal mobile parmi la pluralité de stations de base en fonction d'au moins un critère déterminé appartenant au groupe comprenant :
- un décalage temporel ;
- une puissance de signal reçu par au moins une station de base de ladite pluralité ;
- une qualité de liaison entre au moins une station de base de ladite pluralité et le terminal mobile ; et
- un débit disponible d'au moins une station de base de ladite pluralité.

Selon une autre caractéristique, le procédé comprend une étape d'estimation d'au moins un deuxième décalage temporel pour la réception du au moins un deuxième signal par au moins une station de base.

Selon une caractéristique spécifique, le procédé comprend une étape de réception, par au moins une station de base, d'au moins une information représentative du deuxième décalage temporel pour la réception du au moins un deuxième signal par la au moins une station de base.

Avantageusement, le procédé comprend une étape de réception, par au moins une station de base, d'au moins une information représentative d'un intervalle de silence, l'intervalle de silence étant fonction du au moins un deuxième décalage temporel.

Selon une caractéristique particulière, l'intervalle de silence est fonction du maximum d'au moins deux deuxièmes décalages temporels associés chacun à une station de base.

Selon une autre caractéristique, les étapes du procédé sont réitérées en fonction d'au moins un deuxième paramètre.

L'invention concerne également un procédé de réception d'un signal dans un réseau sans fil, le réseau comprenant une pluralité de stations de base et au moins un terminal mobile, au moins un même premier signal étant émis par un terminal mobile à destination de la pluralité de stations de base. Le procédé de réception comprend une étape de réception, par le terminal mobile, d'une information représentative d'un premier décalage temporel, le premier décalage étant fonction d'au moins une heure de réception du au moins un premier signal par au moins une station de base.

Selon une caractéristique particulière, le premier décalage est fonction d'au moins deux heures de réception du au moins un premier signal par au moins deux stations de base.

Avantageusement, le premier décalage est fonction de la différence entre la au moins une heure de réception du au moins un premier signal par la au moins une station de base et une heure de référence, le premier décalage étant à appliquer à l'émission d'au moins un même deuxième signal par le terminal mobile à destination de la pluralité de stations de base.

### 4. Liste des figures.

L'invention sera mieux comprise, et d'autres particularités et avantages apparaîtront à la lecture de la description qui va suivre, la description faisant référence aux dessins annexés parmi lesquels :
- la figure 1 illustre un système sans fil mettant en oeuvre plusieurs stations de base et un terminal mobile, selon un mode de réalisation particulier de l'invention ;
- les figures 2 et 3 illustrent schématiquement respectivement une station de base et un terminal mobile du système de la figure 1, selon un mode de réalisation particulier de l'invention ;
- les figures 4 et 5 illustrent un procédé d'émission selon des modes particuliers de réalisation de l'invention, mis en oeuvre par au moins une station de base du système de la figure 1 ;
- la figure 6 illustre un procédé de réception selon un mode particulier de réalisation de l'invention, mis en oeuvre par un terminal mobile du système de la figure 1 ;
- la figure 7 illustre un mode de transmission / réception de salves selon un mode particulier de l'invention, mis en oeuvre par des stations de base et un terminal mobile du système de la figure 1 ; et
- la figure 8 illustre un mode de transmission / réception de salves selon un mode particulier de l'invention, mis en oeuvre par des stations de base et des terminaux mobiles du système de la figure 1.

### 5. Description détaillée de modes de réalisation de l'invention.

L'invention sera décrite en référence à un mode particulier de réalisation d'un procédé d'émission dans un réseau sans fil comprenant plusieurs stations de base et au moins un terminal mobile. Les stations de base transmettent de manière synchronisée un même signal à une même fréquence à destination d'un terminal mobile et le terminal mobile émet un même signal à destination de la pluralité de stations de base. Les stations de base ayant reçu le signal émis par le terminal mobile mesurent l'heure de réception réelle du signal et le comparent à une heure de référence correspondant à l'heure à laquelle était attendue le signal. Le réseau estime ainsi les décalages de réception du signal par rapport à l'heure de réception attendue et calcule un décalage temporel que devra appliquer le terminal mobile pour l'émission d'un deuxième signal, afin d'optimiser la réception de ce deuxième signal par les stations de base. Une information représentative d'un décalage temporel est émise à destination d'un terminal mobile, le décalage temporel étant estimé à partir de la réception par une ou plusieurs stations de base d'un signal émis par le terminal mobile à destination de la pluralité de stations de base.

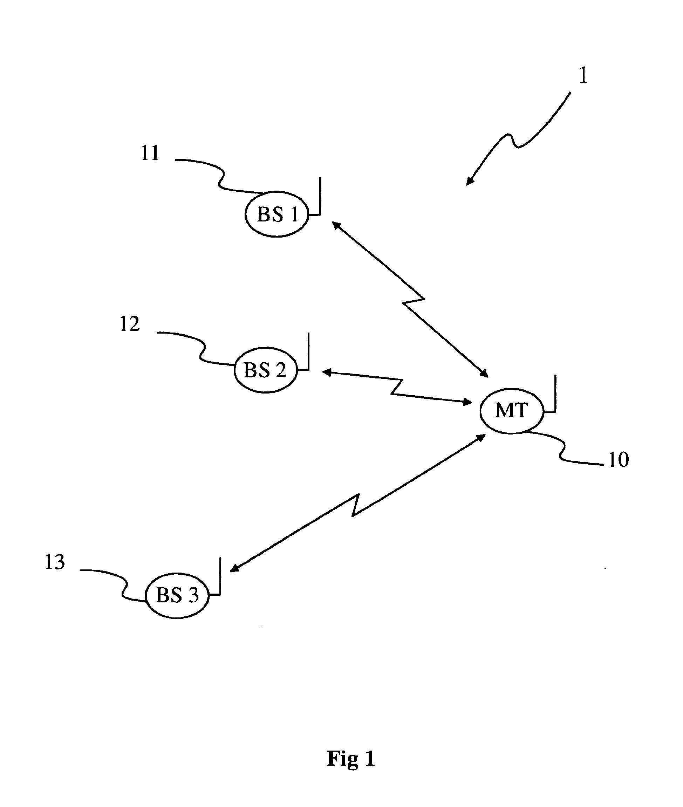

La **figure 1** illustre un système 1 de communication sans fil mettant en oeuvre plusieurs stations de base 11, 12 et 13 et un terminal mobile 10, selon un mode particulier de réalisation de l'invention. Les stations de base 11 à 13 émettent à une fréquence unique, c'est-à-dire que les stations de base opèrent sur une fréquence unique (c'est-à-dire avec un écart en fréquence négligeable au regard du système OFDM considéré, typiquement inférieur à 1 Hz pour un système de type DVB-T (de l'anglais « Digital Video Broadcasting - Terrestrial » ou en français « Diffusion Vidéo Numérique - Terrestre »). L'émission à une fréquence unique par l'ensemble des stations de base du réseau permet de s'affranchir de tout mécanisme de « handover » au niveau du terminal mobile. Le terminal mobile 10 émet des mêmes signaux à destination des stations de bases 11 à 13, c'est-à-dire que le terminal mobile utilise un même canal physique pour émettre les mêmes données vers les stations de base 11 à 13. De manière générale, un canal physique est caractérisé par une bande de fréquences et un intervalle de temps (de l'anglais « time slot »). Dans le cas particulier d'un accès CDMA (de l'anglais « Code Division Multiple Access » ou « Accès multiple par Répartition par Code»), un canal physique est en outre caractérisé par un code d'étalement. Les stations de base 11 à 13 et le terminal mobile 10 possèdent chacun une seule antenne d'émission. Le terminal mobile 10 est apte à recevoir et décoder les signaux émis par les stations de base 11 à 13 et les stations de base 11 à 13 sont aptes à recevoir et décoder les signaux émis par le terminal mobile 10.

De manière avantageuse, le terminal mobile 10 du système 1 est un appareil portable, par exemple un téléphone ou terminal portable adapté à recevoir et à traiter des services diffusés (par exemple restitution de voix ou de données audio et/ou affichage de données vidéo, ou plus généralement restitution, stockage ou traitement de données multimédia).

De manière avantageuse, les stations de base 11 à 13 du système 1 sont des appareils fixes. Les stations de base sont des émetteurs de forte puissance adaptés à diffuser des données sur une large zone de couverture ou des émetteurs de moyenne ou faible puissance adaptés à diffuser des données sur une zone de couverture plus restreinte. Selon une variante, l'une au moins des stations de base 11 à 13 forme un système couvrant une « pico-cellule » (de l'anglais « picocell ») c'est-à-dire une petite zone, comme l'intérieur d'un immeuble, d'un supermarché, d'une gare, c'est-à-dire ayant une portée de quelques dizaines de mètres (selon certains modes de réalisation, dans une pico-cellule, la portée est avantageusement inférieure à 300 m). Selon une autre variante, l'une au moins des stations de base forme un système conçu pour couvrir une « femto-cellule » (de l'anglais « femtocell ») c'est-à-dire une zone restreinte de plus petite taille qu'une pico-cellule, comme quelques pièces d'une maison ou d'un immeuble, un étage d'un immeuble, un avion, c'est-à-dire ayant une portée de quelques mètres (selon certains modes de réalisation, dans une femto-cellule, la portée est avantageusement inférieure à 100 m).

Selon une variante, les stations de base 11 à 13 sont de type SISO (de l'anglais « Single Input Single Output » ou « entrée unique sortie unique » en français) et ne possèdent qu'une seule antenne. Les stations de base forment un réseau synchronisé émettant à destination d'un terminal mobile donné un même contenu à une même fréquence, c'est-à-dire que les stations de base opèrent sur une fréquence unique (c'est-à-dire avec un écart en fréquence négligeable au regard du système OFDM considéré (typiquement inférieur à 1 Hz pour un système de type DVB-T)) de manière synchrone (c'est-à-dire avec un écart temporel négligeable (par exemple moins d'1 µs) et sans glissement temporel d'un signal émis par une station de base par rapport à un autre signal émis par une autre station de base), la fréquence d'émission étant synchronisée sur les différentes stations de base, par exemple par la réception d'une fréquence de référence donnée par un élément externe (par exemple par satellite GPS (de l'anglais « Global Positioning System » ou « Système de localisation globale » en français) ou par station terrestre de diffusion d'une heure ou fréquence de référence).

Selon une autre variante, les stations de base 11 à 13 sont de type MIMO et possèdent chacune un codeur MIMO et plusieurs antennes transmettant un signal MIMO. Selon cette variante, les stations de base forment également un réseau synchronisé émettant un même contenu à destination d'un terminal mobile donné à une même fréquence.

Avantageusement, une partie des stations de base du système 1 sont du type SISO et l'autre partie est du type MIMO. Selon cette variante, les stations de base forment également un réseau synchronisé émettant un même contenu à destination d'un terminal mobile donné à une même fréquence.

Selon un autre exemple de mise en oeuvre, les stations de base 11 à 13 forment un système MIMO coopératif dans lequel les stations de base possèdent indifféremment une ou plusieurs antennes. Un tel système MIMO coopératif utilise des antennes distribuées sur plusieurs stations de base, c'est-à-dire que le signal transmis est réparti spatialement entre plusieurs antennes pouvant appartenir à plusieurs stations de base d'un même sous-ensemble. Le signal complet, avec tous les flux spatiaux, est combiné dans l'air pour être reçu par le terminal mobile auquel sont assignées les stations de base du sous-ensemble considéré. Les stations de base d'un tel système MIMO coopératif forment également un réseau synchronisé émettant un même contenu à destination du terminal mobile considéré à une même fréquence.

Selon une autre variante, certaines stations de base du système 1 sont du type MIMO, coopératif ou non, et les autres sont du type SISO.

Avantageusement, le terminal mobile 10 est du type MIMO et possède plusieurs antennes.

Selon une variante, certaines stations de base forment un sous-ensemble de stations de base associées au terminal mobile. Avantageusement, ces stations de base appartenant au sous-ensemble ont une caractéristique commune : elles sont par exemple situées dans une même zone géographique ou définissent un même sous-réseau ou offrent des services similaires. Selon une variante, la définition d'un sous-ensemble par les stations de base qu'il contient est fixe dans le temps ou varie dans le temps.

Selon une autre variante, le système 1 met en oeuvre plusieurs terminaux mobiles, chaque terminal mobile émettant des mêmes signaux à destination de la pluralité de stations de base.

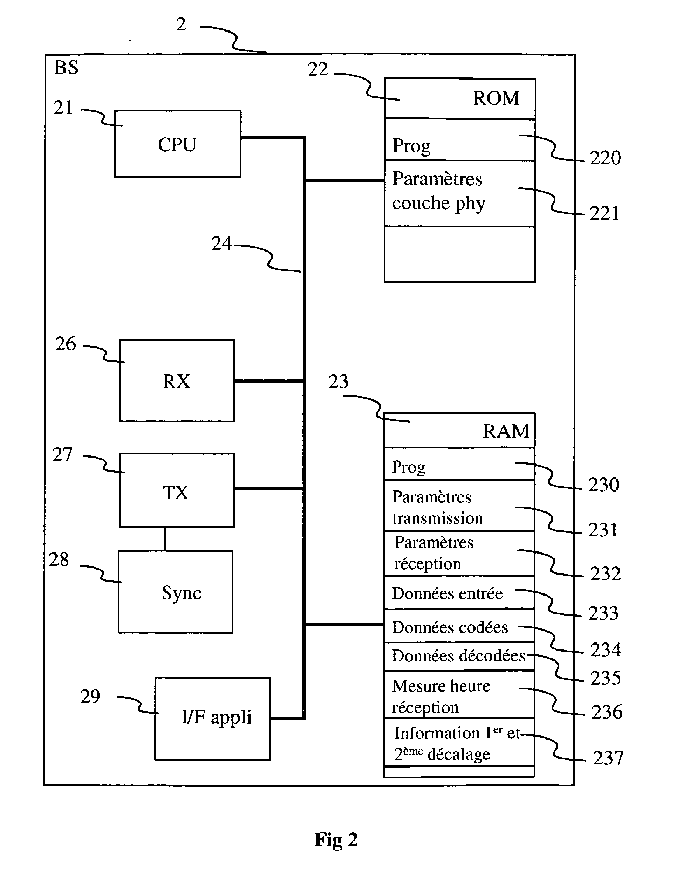

La **figure 2** illustre schématiquement un exemple de réalisation matérielle d'une station de base 2 correspondant par exemple aux stations de base 11 à 13 de la figure 1.

La station de base 2 comprend les éléments suivants, reliés entre eux par un bus 24 d'adresses et de données qui transporte également un signal d'horloge :
- un microprocesseur 21 (ou CPU) ;
- une mémoire non volatile de type ROM (de l'anglais « Read Only Memory ») 22 ;
- une mémoire vive ou RAM (de l'anglais « Random Access Memory ») 23 ;
- une interface radio 26 ;
- une interface 27 adaptée à la transmission de données (par exemple diffusion de services ou transmission multipoint à point ou point à point) et réalisant notamment les fonctions d'un codeur et/ou de modulateurs OFDM ;
- une interface 28 adaptée à recevoir un signal de synchronisation et à synchroniser l'interface 27 ; et/ou
- une interface MMI (ou interface homme/machine de l'anglais « Man Machine Interface ») 29 ou une application spécifique adaptée à l'affichage d'informations pour un utilisateur et/ou l'entrée de données ou de paramètres (par exemple le paramétrage des sous-porteuses et des données à transmettre).

On observe que le mot « registre » utilisé dans la description des mémoires 22 et 23 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives de données reçues ou à diffuser).

La mémoire ROM 22 comprend notamment :
- un programme « prog » 220 ; et
- des paramètres 221 de couches physiques.

Les algorithmes mettant en oeuvre les étapes du procédé propres à l'invention et décrits ci-après sont stockés dans la mémoire ROM 22 associée à la station de base 2 mettant en oeuvre ces étapes. A la mise sous tension, le microprocesseur 21 charge et exécute les instructions de ces algorithmes.

La mémoire vive 23 comprend notamment :
- dans un registre 230, le programme de fonctionnement du microprocesseur 21 chargé à la mise sous tension de la station de base 2 ;
- des paramètres de transmission 231 (par exemple paramètres de modulation, de codage, MIMO, de récurrence des trames) ;
- des paramètres de réception 232 (par exemple paramètres de modulation, de codage, MIMO, de récurrence des trames) ;
- des données entrantes 233 ;
- des données codées 234 pour la transmission de données.
- des données décodées 235 mises en forme pour être transmises à l'interface vers l'application 29.
- des données 236 représentatives des heures de réception de signaux mesurées par la station de base ; et
- des données 237 représentatives d'un premier décalage temporel à appliquer à l'émission de signaux par un terminal mobile 3 et/ou d'un deuxième décalage temporel représentatif du retard ou de l'avance de réception de signaux par la station de base 2 par rapport à une heure de référence.

L'interface radio 26 est adaptée à la réception des signaux émis le cas échéant par le terminal mobile 10 du système 1.

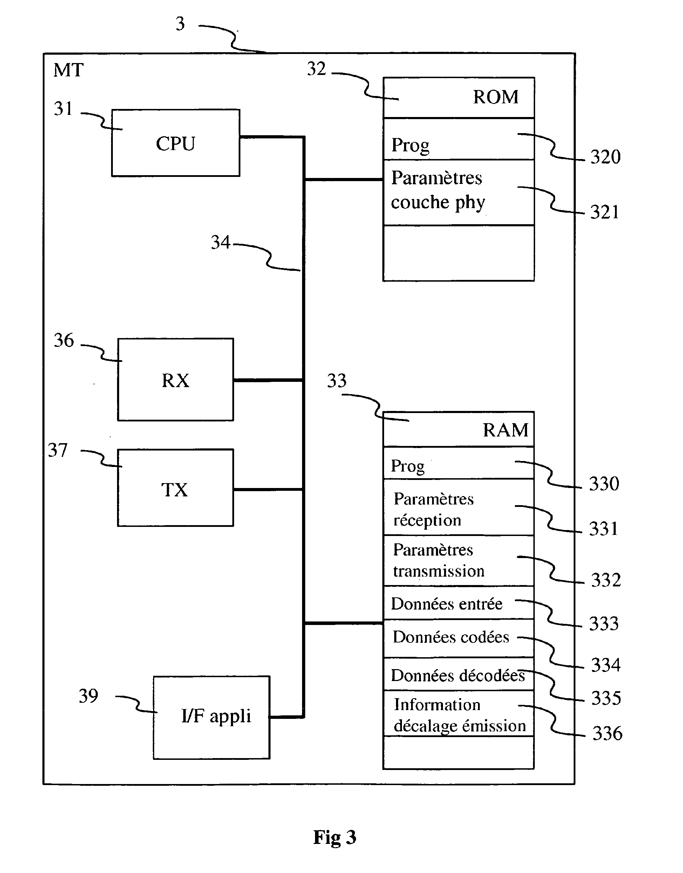

La **figure 3** illustre schématiquement un exemple de réalisation matérielle d'un terminal mobile 3 appartenant au système 1, correspondant par exemple au terminal mobile 10 et adapté à recevoir et décoder les signaux émis par la station de base 2.

Le terminal mobile 3 comprend les éléments suivants, reliés entre eux par un bus 34 d'adresses et de données qui transporte également un signal d'horloge :
- un microprocesseur 31 (ou CPU) ;
- une mémoire non volatile de type ROM (de l'anglais « Read Only Memory ») 32 ;
- une mémoire vive ou RAM (de l'anglais « Random Access Memory ») 33 ;
- une interface radio 36 ; et
- une interface 37 adaptée à la transmission de données ; et
- une interface 39 MMI adaptée à l'affichage d'informations pour un utilisateur et/ou l'entrée de données ou de paramètres (par exemple le paramétrage des sous-porteuses et des données transmises).

On observe que le mot « registre » utilisé dans la description des mémoires 32 et 33 désigne dans chacune des mémoires mentionnées, aussi bien une zone de mémoire de faible capacité qu'une zone mémoire de grande capacité (permettant de stocker un programme entier ou tout ou partie des données représentatives d'ensembles de données reçus ou décodés).

La mémoire ROM 32 comprend notamment :
- un programme « prog » 320 ; et
- des paramètres 321 de couches physiques.

Les algorithmes mettant en oeuvre les étapes du procédé propre à l'invention et décrits ci-après sont stockés dans la mémoire ROM 32 associée au terminal mobile 3 mettant en oeuvre ces étapes. A la mise sous tension, le microprocesseur 31 charge et exécute les instructions de ces algorithmes.

La mémoire vive 33 comprend notamment :
- dans un registre 330, le programme de fonctionnement du microprocesseur 31 chargé à la mise sous tension du terminal mobile 3 ;
- des paramètres de réception 331 (par exemple paramètres de modulation, de codage, MIMO, de récurrence des trames) ;
- des paramètres de transmission 332 (par exemple paramètres de modulation, de codage, MIMO, de récurrence des trames) ;
- des données entrantes 333 correspondant aux données reçues et décodées par le récepteur 36 ;
- des données codées 334 pour la transmission de données.
- des données décodées 335 mises en forme pour être transmises à l'interface vers l'application 39 ; et
- des données 336 représentatives d'un décalage temporel à appliquer à l'émission d'un signal par le terminal mobile 3.

D'autres structures de la station de base 2 et/ou du terminal mobile 3 que celles décrites en regard des figures 2 et 3 sont compatibles avec l'invention. En particulier, selon des variantes, des stations de base et/ou des terminaux mobiles compatibles avec l'invention sont mis en oeuvre selon une réalisation purement matérielle ("hardware" en anglais), par exemple sous forme d'un composant dédié (par exemple dans un ASIC ou FPGA ou VLSI) (respectivement « Application Specific Integrated Circuit » en anglais, signifiant « Circuit Intégré à vocation d'une application spécifique », « Field-Programmable Gate Array » en anglais, signifiant « Réseau de Portes Programmable In-Situ », « Very Large Scale Integration » en anglais, signifiant « Intégration à très grande échelle ») ou de plusieurs composants électroniques intégrés dans un appareil ou encore sous forme d'un mélange d'éléments matériels et d'éléments logiciels (« software » en anglais).

L'interface radio 36 est adaptée à la réception des signaux émis par les stations de base 11 à 13 du système 1.

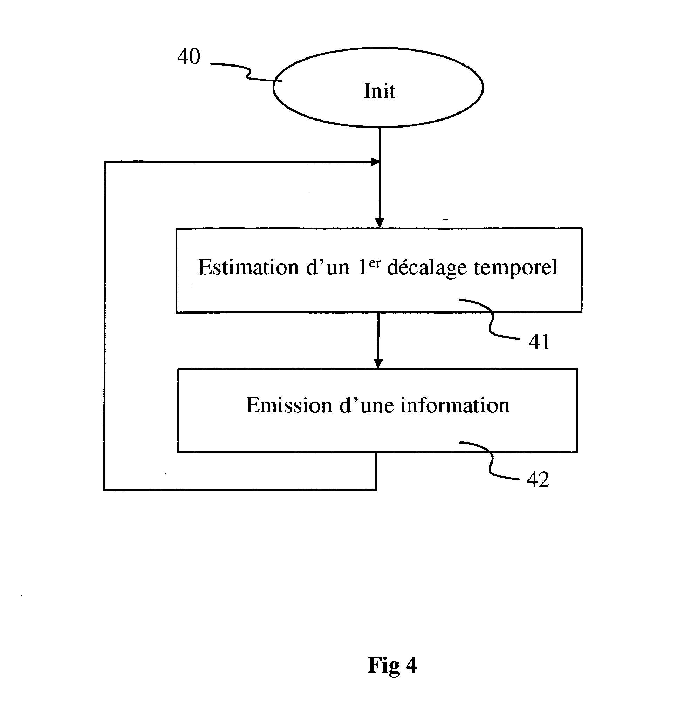

La **figure 4** illustre un procédé d'émission mis en oeuvre dans au moins une station de base du système 1, selon un exemple de mise en oeuvre non limitatif particulièrement avantageux de l'invention.

Au cours d'une étape d'initialisation 40, les différents paramètres de la au moins une station de base sont mis à jour. En particulier, les paramètres correspondant aux signaux à émettre ou à recevoir et aux sous-porteuses correspondantes sont initialisés d'une manière quelconque (par exemple suite à la réception de messages d'initialisation émis par une des stations de base, dite station maître ou par un serveur non représenté du système 1, ou encore par des commandes d'un opérateur).

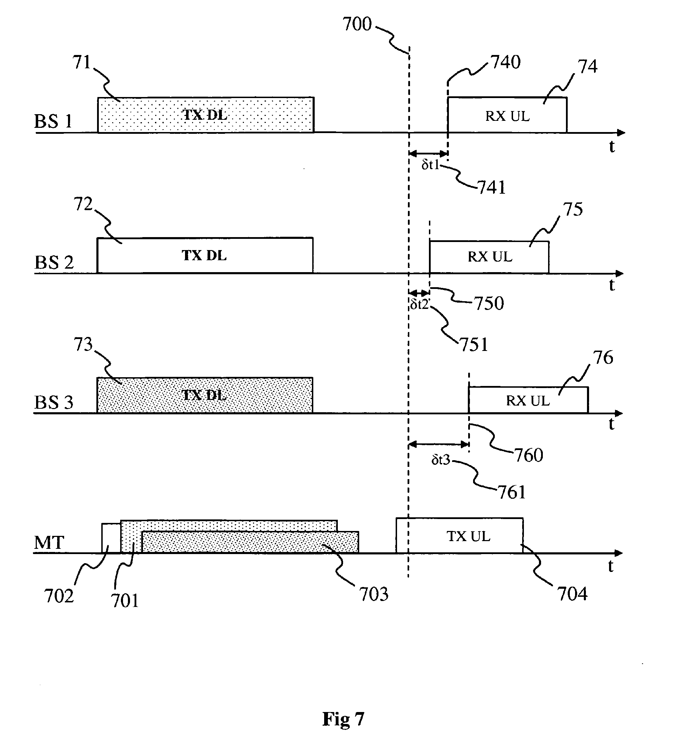

Ensuite, au cours d'une étape 41, un premier décalage temporel est estimé par une station de base de la pluralité de stations de base ou par un serveur du système 1 non représenté sur la figure 1 et relié à la pluralité de stations de base. Le premier décalage temporel est estimé sur la base des heures de réception d'un même premier signal émis par le terminal mobile 10 et reçus par une ou plusieurs stations de base 11 à 13. Chaque station de base ayant reçu le premier signal mesure l'heure de réception de ce premier signal. Ainsi, et tel qu'illustré à la **figure 7****,** des salves sont échangées entre les stations de base BS1, BS2 et BS3 d'un côté et le terminal mobile MT d'un autre côté. Les stations de base BS1, BS2 et BS3 (référencées respectivement 11, 12 et 13 sur la figure 1) émettent en voie descendante (ou « downlink » en anglais) respectivement trois salves 71, 72 et 73 représentatives des mêmes données, de manière synchronisée et à une même fréquence (c'est-à-dire avec un écart en fréquence négligeable au regard du système OFDM considéré, typiquement inférieur à 1 Hz pour un système de type DVB-T). Les distances séparant chacune des stations de base 11 à 13 du terminal mobile 10 étant différentes, les temps de propagation des salves 71 à 73 émises simultanément par respectivement les stations de base 11 à 13 sont eux aussi différents. Ainsi, la station de base 12 étant la plus proche du terminal mobile 10, la salve 72 émise par BS2 est reçue la première (salve 702) par le terminal mobile 10. La salve 71 émise par BS1 est alors reçue la deuxième (salve 701) puis la salve 73 émise par la station BS3 la plus éloignée du terminal mobile 10 est enfin reçue (salve 703). Comme illustré sur la figure 7, le niveau de réception de chacune des salves 701, 702, 703 est différent et dépend par exemple d'un ou plusieurs paramètres appartenant au groupe suivant :
- la distance séparant la station de base ayant émis la salve considérée du terminal mobile recevant la salve ;
- la puissance d'émission de la salve par la station de base considérée ; et
- la qualité de la liaison entre la station de base ayant émis la salve et le terminal mobile recevant la salve ainsi émise, la qualité de la liaison dépendant par exemple de la présence d'obstacles (par exemple arbre, mur, bâtiment) sur le chemin de propagation et étant par exemple fonction d'un ratio signal sur bruit SNR (de l'anglais « Signal to Noise Ratio »), le SNR étant un exemple de mesure représentatif de la qualité de la liaison.

Une fois les salves 701 à 703 reçues et décodées par le terminal mobile 10, le terminal mobile émet une salve 704 vers les stations de base BS1, BS2 et BS3 après respect d'un intervalle de silence déterminé.

Selon un premier exemple de mise en oeuvre, la salve 704 est émise durant un intervalle de temps spécifié par le réseau de stations de base, cet intervalle de temps correspondant à un intervalle temporel pendant lequel de nouveaux terminaux mobiles peuvent rejoindre le réseau. Ce processus est connu de l'homme du métier sous le nom de « initial ranging » (ou ajustement initial en français) et est décrit plus en détail par exemple dans le standard IEEE 802.16e-2005. Durant le processus d'ajustement initial, la salve 704 émise par le terminal mobile est attendue par chacune des stations de base BS1 à BS3 en liaison avec le terminal mobile à un intervalle temporel prédéterminé et alloué par une station maître ou un serveur gérant le réseau de stations de base. La salve 704 émise par le terminal mobile 10 est ainsi attendue par chacune des stations de base BS1 à BS3 à une heure de référence 700, correspondant au début de l'intervalle temporel alloué par le réseau pour la réception des salves émises par les nouveaux terminaux mobiles souhaitant rejoindre le réseau. Chaque station BS1 à BS3 recevant la salve 704 émise mesure alors respectivement l'heure de réception réelle 740, 750 et 760 de respectivement les salves reçues 74, 75 et 76. Ces heures de réception sont ensuite transmises à une station maître ou un serveur gérant le réseau de stations de base qui peut en déduire le décalage temporel de réception (de l'anglais « reception offset ») δt1, δt2 et δt3 pour chacune des stations de base BS1 à BS3, et correspondant à l'heure de réception moins l'heure de référence. Selon une variante, chaque station de base estime le décalage temporel de réception la concernant et le transmet à une station maître ou un serveur. A partir des décalages de réception associés à chacune des stations de base ainsi estimés, le décalage temporel devant être appliqué par le terminal mobile pour l'émission de la salve suivante (ou du prochain signal émis à destination de la pluralité de stations de base) est alors estimé. Ce décalage temporel sera nommé premier décalage temporel dans la suite de la description. Avantageusement, le premier décalage temporel est déterminé de telle sorte que la réception d'une deuxième salve émise par le terminal mobile avec prise en compte de ce premier décalage temporel coïncide pour une station de base avec l'heure de référence pour la réception de la deuxième salve par les stations de base, l'heure de référence correspondant au début de l'intervalle temporel alloué par le réseau pour la réception des salves émises par le terminal mobile 10. La station de base pour laquelle l'heure de réception de la deuxième salve coïncide avec l'heure de référence est avantageusement la station de base BS2 pour laquelle le décalage temporel de réception estimé lors de la réception de la première salve est le plus faible, en l'occurrence δt2 (751) sur la figure 7. Ainsi, pour faire coïncider la réception de la deuxième salve par BS2 avec l'heure de référence, l'émission de la deuxième salve par le terminal mobile 10 doit être avancée de δt2. Cette solution présente l'avantage d'une estimation simple et rapide du premier décalage temporel et que les décalages de réception de la deuxième salve par les autres stations de base BS1 et BS3 soient toujours positifs. Selon l'invention, l'heure de réception et l'heure de référence coïncident lorsque l'écart temporel entre ces deux heures est par exemple inférieur à 100ns ou 1µs. Selon une variante, le premier décalage temporel est déterminé sur la base de deux décalages temporels de réception correspondant à deux stations de base. Par exemple, le premier décalage temporel est déterminé à partir des décalages de réception δt1 et δt2 de respectivement BS1 et BS2, δt1 et δt2 ayant des valeurs proches comparativement à δt3. Dans ce cas de figure, le premier décalage temporel prend une valeur égale à par exemple (δt1+δt2)/2. L'émission de la deuxième salve par le terminal mobile 10 est ainsi avancée d'une durée égale à (δt1+δt2)/2. L'avantage d'une telle solution est que la réception de la deuxième salve est optimisée pour deux stations de base. Selon une autre variante, le premier décalage temporel est déterminé sur la base de tous les décalages temporels de réception correspondant à l'ensemble des stations de base, c'est-à-dire BS1 à BS3 selon la figure 7. La valeur prise par le premier décalage temporel est par exemple égale à (δt1+δt2+δt3)/3 et l'émission de la deuxième salve par le terminal mobile est avancée d'une durée égale à (δtl+δt2+δt3)/3,

Selon un deuxième exemple de mise en oeuvre, l'ajustement (de l'anglais «ranging») de l'émission d'un signal émis par le terminal mobile 10 à destination de l'ensemble des stations de base 11 à 13 est périodique. Le premier décalage temporel à appliquer à un signal ou une salve émise par le terminal mobile est estimé à partir d'un ou plusieurs décalages temporels de réception déterminés par une ou plusieurs stations de base sur la base du signal ou de la salve reçue juste avant. Cet exemple de mise en oeuvre présente l'avantage d'adapter le premier décalage temporel en fonction par exemple du déplacement du terminal mobile. Le ou les décalages de réception δt1 à δt3 ayant servi de base pour l'estimation du premier décalage temporel ne sont pas nécessairement les mêmes pour chaque estimation du premier décalage temporel. Avantageusement, une station de base maître ou un serveur enregistre dans une table les décalages de réception estimées pour le terminal mobile 10. Selon une variante, dans le cas où plusieurs terminaux mobiles émettent chacun un même signal à destination des stations de base 11 à 13, le serveur ou la station maître maintient une table pour chaque terminal mobile dans laquelle sont enregistrées les décalages de réception pour chaque station de base. La maintenance de telles tables (ou d'une telle table dans le cas d'un seul terminal mobile) permet à la station maître (ou au serveur) d'ajuster en permanence les stations de base (et ainsi le ou les décalages de réception correspondant) servant de base pour le calcul du premier décalage temporel.

De manière avantageuse, en plus d'être fonction d'une ou plusieurs heures de réception d'un premier signal émis par le terminal mobile vers les stations de base, le premier décalage temporel est également fonction d'un premier paramètre appartenant au groupe de paramètres suivant :
- puissance de signal reçu par au moins une des stations de base 11 à 13 : la station de base recevant le signal émis (ou la salve 704) avec le meilleur niveau de puissance, le niveau de puissance étant estimé par chacune des stations de base ayant reçu le signal émis selon toute technique connue de l'homme du métier, est avantageusement sélectionnée pour que soit utilisé le décalage de réception qui lui est associé pour l'estimation du premier décalage temporel. Selon une variante, les deux stations de base ayant la meilleure réception du signal parmi la pluralité de stations de base sont sélectionnées pour que soient utilisés les décalages de réception qui leur sont chacune associés pour l'estimation du premier décalage temporel. Selon une autre variante, la ou les stations de base dont le niveau de puissance de réception est supérieur à une valeur seuil (par exemple -80dB) sont sélectionnées pour l'estimation du premier décalage temporel. La prise en compte de ce paramètre offre notamment l'avantage de n'utiliser pour le calcul du premier décalage temporel que la ou les stations de base recevant le signal avec un niveau de puissance effectivement suffisant pour le traitement du signal émis par le terminal mobile ;
- qualité de liaison entre au moins une des stations de base 11 à 13 et le terminal mobile 10 : la qualité de la liaison entre une station de base et le terminal mobile est par exemple estimée en déterminant le ratio signal sur bruit SNR (de l'anglais « Signal to Noise Ratio »). Avantageusement, la station de base ayant le SNR le plus élevé est sélectionnée pour que soit utilisé le décalage de réception qui lui est associé pour l'estimation du premier décalage temporel. Selon une variante, les deux stations de base présentant les SNR les plus élevés sont sélectionnées pour que soient utilisés les décalages de réception qui leur sont chacune associés pour l'estimation du premier décalage temporel. Selon une autre variante, la ou les stations de base dont le SNR est supérieur à une valeur seuil (par exemple 10dB, permettant d'avoir notamment une estimation du décalage de réception d'un signal émis suffisamment précise, ou 20dB, permettant notamment une transmission de données à haut débit) sont sélectionnées pour l'estimation du premier décalage temporel. La prise en compte de ce paramètre offre notamment l'avantage de n'utiliser pour le calcul du premier décalage temporel que la ou les stations de base recevant le signal de manière suffisamment audible pour pouvoir le traiter ; et
- débit disponible d'au moins une des stations de base 11 à 13 : la ou les deux stations de base offrant le meilleur débit disponible pour la liaison avec le terminal mobile est (ou sont) sélectionnée(s) pour que soit (ou soient) utilisé(s) le (ou les) décalage(s) de réception qui lui (leur) est (sont) associé(s) pour l'estimation du premier décalage temporel. Selon une autre variante, la ou les stations de base dont le débit disponible est supérieur à une valeur seuil (par exemple 90 Kb/s pour de la voix ou 2 Mb/s pour de la vidéo) sont sélectionnées pour l'estimation du premier décalage temporel. La prise en compte de ce paramètre offre notamment l'avantage de n'utiliser pour le calcul du premier décalage temporel que la ou les stations de base dont le débit disponible est suffisant pour transmettre les données au terminal mobile.

Selon une variante, le groupe de paramètres ne comprend qu'un seul ou deux ou trois des paramètres listés ci-dessus. Selon une autre variante, le premier paramètre est une combinaison d'au moins deux des paramètres du groupe de paramètres définis ci-dessus, par exemple une combinaison associant la qualité de liaison au débit disponible.

De manière avantageuse, les paramètres listés ci-dessus sont stockés dans une table maintenue par une station maître ou un serveur contrôlant le réseau de stations de base pour chaque terminal mobile, chacune de ces tables contenant les paramètres estimées pour chaque station de base. La maintenance de telles tables (ou d'une telle table dans le cas d'un seul terminal mobile) permet à la station maître (ou au serveur) d'ajuster en permanence les stations de base servant de référence pour le calcul du premier décalage temporel.

Puis, au cours d'une étape 42, au moins une station de base émet à destination du terminal mobile 10 une information représentative du premier décalage temporel. Le premier décalage temporel est à appliquer pour l'émission par le terminal mobile d'une deuxième salve ou d'un deuxième signal suivant celle ou celui utilisé pour l'estimation des décalages de réception par les stations de base. Selon une variante, le serveur de gestion du réseau demande à la station de base ayant servi de base pour l'estimation du premier décalage temporel, en fonction de l'un ou plusieurs des paramètres décrits ci-dessus, d'émettre l'information représentative du premier décalage temporel. Avantageusement, le serveur demande à plusieurs stations de base, par exemple deux stations de base, d'émettre l'information représentative du premier décalage temporel à destination du terminal mobile. Dans ce cas, les stations de base émettant l'information sont avantageusement celles dont les décalages de réception d'un premier signal (ou d'une première salve) émis par le terminal mobile ont servi de base pour l'estimation du premier décalage temporel. Selon une variante, toutes les stations de base émettent l'information représentative du premier décalage temporel de manière synchronisée et à la même fréquence.

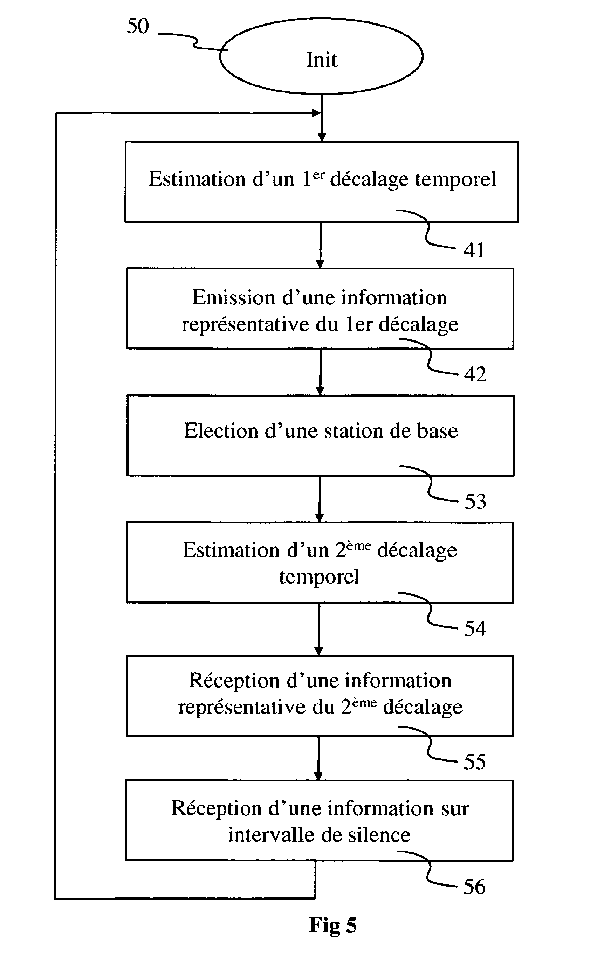

La **figure 5** illustre un procédé d'émission mis en oeuvre dans au moins une station de base du système 1, selon un exemple de mise en oeuvre non limitatif particulièrement avantageux de l'invention. Certaines étapes sont similaires à des étapes décrites précédemment et portent les mêmes références.

Au cours d'une étape d'initialisation 50, les différents paramètres de la au moins une station de base sont mis à jour. En particulier, les paramètres correspondant aux signaux à émettre ou à recevoir et aux sous-porteuses correspondantes sont initialisés d'une manière quelconque (par exemple suite à la réception de messages d'initialisation émis par une des stations de base, dite station maître ou par un serveur non représenté du système 1, ou encore par des commandes d'un opérateur).

Ensuite, au cours d'une étape 41, un premier décalage temporel est estimé (en fonction de l'heure (ou des heures) de réception du premier signal émis par le terminal mobile par la (ou les) station(s) de base, les heures de réception étant mesurées par rapport à une heure de référence) et au cours d'une étape 42, une information représentative du premier décalage temporel estimé au cours de l'étape 41 est émise à destination du terminal mobile 10. Ces étapes 41 et 42 sont identiques aux étapes décrites précédemment et portant les mêmes références.

Puis, au cours d'une étape 53, une station de base est élue station de base de référence pour le terminal mobile 10. Avantageusement, la station de base de référence est la station qui décode les signaux émis par le terminal mobile. Les autres stations de base du réseau recevant également les signaux émis par le terminal mobile ne les décodent pas. Cette élection d'une station de base de référence offre l'avantage d'optimiser les ressources du réseau en n'assignant qu'une station de base au décodage des signaux émis par le terminal mobile 10. Avantageusement, la station de base de référence est celle pour laquelle la réception de la deuxième salve coïncide avec l'heure de référence, suite au décalage temporel estimée lors de l'étape 41. Selon une variante, plusieurs stations de base, par exemple deux ou trois stations de base, sont élues stations de base de référence. Chacune des stations de base de référence décode les signaux émis par le terminal mobile, les signaux ainsi décodés étant transmis à un serveur (ou une passerelle) du réseau ou à une station maître pour traitement. Ainsi, si une des stations de base de référence n'a pas reçu correctement un signal émis par le terminal mobile, ou l'a reçu de manière incomplète, le serveur ou la station maître peut recomposer le signal reçu à partir du signal décodé par une autre station de base de référence. Cette élection de plusieurs stations de base offre l'avantage de minimiser la perte de données émises par le terminal mobile et de minimiser les erreurs de réception des signaux. L'élection d'une ou plusieurs stations de base est réalisée par un serveur de gestion du réseau ou par une station de base maître. L'élection de la ou les stations de base de référence est faite en fonction d'un critère déterminé appartenant au groupe comprenant :
- un décalage temporel de réception : la station de base dont le décalage temporel de réception estimée est le plus faible est élue station de base de référence, c'est-à-dire la station de base pour laquelle l'heure de réception d'un signal émis par le terminal mobile est le plus proche de l'heure de référence de réception par les stations de base du signal émis par le terminal mobile. Selon une variante, les stations de base, par exemple deux stations de base, ayant les décalages temporels de réceptions les plus petits sont élues stations de base de référence. Selon une autre variante, la ou les stations de base dont le décalage temporel de réception est inférieur à une valeur seuil (par exemple inférieur à 3 µs ou inférieur à 800 ns) est (sont) élue(s) station(s) de base de référence ;
- puissance de signal reçu par au moins une des stations de base 11 à 13 : la station de base recevant le signal émis (ou la salve 704) avec le meilleur niveau de puissance, le niveau de puissance étant estimé par chacune des stations de base ayant reçu le signal émis selon toute technique connue de l'homme du métier, est avantageusement élue comme station de base de référence. Selon une variante, les deux stations de base ayant la meilleure réception du signal parmi la pluralité de stations de base sont élues stations de base de référence. Selon une autre variante, la ou les stations de base dont le niveau de puissance de réception est supérieur à une valeur seuil (par exemple - 80dB) est (sont) élue(s) station(s) de base de référence. La prise en compte de ce critère offre notamment l'avantage d'élire la ou les stations de base recevant le signal avec un niveau de puissance effectivement suffisant pour le traitement du signal émis par le terminal mobile ;
- qualité de liaison entre au moins une des stations de base 11 à 13 et le terminal mobile 10 : la qualité de la liaison entre une station de base et le terminal mobile est par exemple estimée en déterminant le ratio signal sur bruit SNR (de l'anglais « Signal to Noise Ratio »). Avantageusement, la station de base ayant le SNR le plus élevé est élue station de base de référence. Selon une variante, les deux stations de base les SNR les plus élevés sont élues stations de base de référence. Selon une autre variante, la ou les stations de base dont le SNR est supérieur à une valeur seuil (par exemple 10dB ou 20dB) est (sont) élue(s) station(s) de base de référence. La prise en compte de ce critère offre notamment l'avantage d'élire la ou les stations de base recevant le signal de manière suffisamment audible pour pouvoir le traiter; et
- débit disponible d'au moins une des stations de base 11 à 13 : la ou les deux stations de base offrant le meilleur débit disponible pour la liaison avec le terminal mobile est (sont) élue(s) station(s) de base de référence. Selon une autre variante, la ou les stations de base dont le débit disponible est supérieur à une valeur seuil (par exemple 90 Kb/s pour de la voix ou 2 Mb/s pour de la vidéo) est (sont) élue(s) station(s) de base de référence. La prise en compte de ce critère offre notamment l'avantage d'élire la ou les stations de base dont le débit disponible est suffisant pour transmettre les données au terminal mobile.
Selon une variante, le groupe de critères ne comprend qu'un seul ou deux ou trois ou quatre des paramètres listés ci-dessus. Selon une autre variante, le premier paramètre est une combinaison d'au moins deux des paramètres du groupe de paramètres définis ci-dessus, par exemple une combinaison associant un décalage temporel de réception au débit disponible.

Puis, au cours d'une étape 54, un deuxième décalage temporel est estimé pour au moins une station de base sur la base du premier signal (ou d'une première salve) émis(e) par le terminal mobile 10. Le deuxième décalage de réception correspond à la différence entre une heure de réception attendue d'un deuxième signal émis par le terminal mobile, l'émission de ce deuxième signal par le terminal mobile ayant été avancé ou reculé d'une durée égale au premier décalage temporel, et une heure de référence de réception du deuxième signal par la pluralité de stations de base. Une fois le premier décalage temporel estimé, par exemple par un serveur de gestion du réseau ou une station de base maître, le serveur ou la station maître estime pour une ou plusieurs station(s) de base le décalage, par rapport à une heure de référence, avec lequel la ou les station(s) de base recevront le deuxième signal émis. Selon une variante, l'estimation de ce deuxième décalage de réception est réalisée pour la ou les stations de base de référence du terminal mobile. Selon une autre variante, l'estimation du décalage de réception est réalisée pour chacune des stations de base de la pluralité de stations de base 11 à 13.

Puis, au cours d'une étape 55, l'information représentative du deuxième décalage temporel est transmise par le serveur ou une station maître à la ou les stations de base considérée(s). La ou les stations de base pour lesquelles le deuxième décalage temporel a été calculé reçoit cette information contenant la valeur du décalage temporel avec lequel sera reçu un deuxième signal émis par le terminal mobile à destination de cette ou ces stations de base. Cette information correspond à une estimation de l'avance ou du retard par rapport à l'heure de référence de réception du deuxième signal avec lequel sera reçu ce deuxième signal. Selon une variante, la ou les stations de référence reçoivent chacune l'information représentative du deuxième décalage temporel qui leur est associé. Selon une autre variante, chaque station de base de la pluralité de stations de base 11 à 13 reçoit l'information représentative du deuxième décalage de réception qui lui est associé. La réception d'une telle information par une station de base permet à la station de base considérée d'optimiser l'écoute et la réception du deuxième signal émis sur un intervalle de temps plus précis correspondant au mieux à ce qui est attendu. Selon une variante, l'information représentative du deuxième décalage n'est pas transmise aux stations de base.

Au cours d'une étape 56, au moins une station de base reçoit une information représentative d'un intervalle de silence correspondant à l'intervalle de temps compris entre la fin de la réception d'une salve et le début de la réception d'une salve suivante, ou à l'intervalle de temps compris entre la fin de l'émission d'une salve et le début de la réception d'une salve suivante. Un intervalle de silence est interposé entre l'émission d'une salve et la réception d'une salve ou entre la réception de deux salves pour éviter tout chevauchement des salves au niveau de la station de base. Selon l'état de l'art, le silence permet de respecter les contraintes de la station de base : notamment pour le basculement RX/TX, allumage de l'amplificateur, ... Selon l'invention, le silence est augmenté pour éviter le chevauchement du fait des heures de réception réelles des salves différentes selon les stations de base.

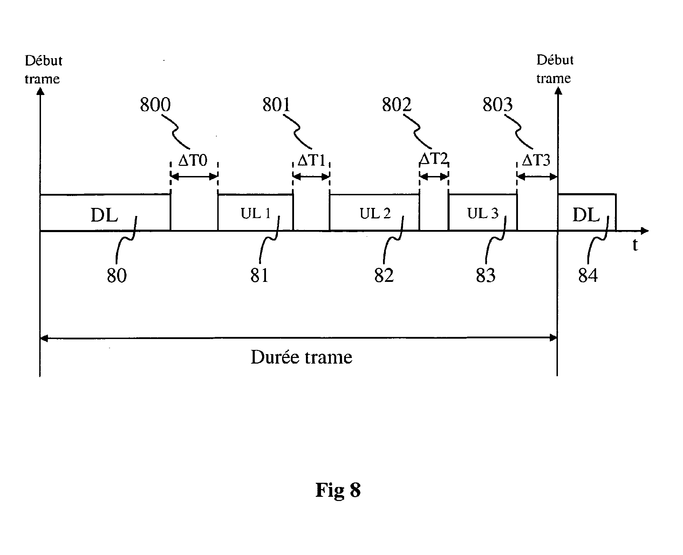

La **figure 8** illustre une trame représentative de l'émission et de la réception de salves dans un réseau formé par au moins une station de base 11, 12 ou 13 et trois terminaux mobiles émettant chacun au moins une salve 81, 82, 83 à destination de la pluralité de stations de base. Sur une trame, les stations de base transmettent en voie descendante (ou « downlink » en anglais) une même salve DL référencée 80 de façon synchronisée et les terminaux mobiles émettent en voie montante (ou « uplink » en anglais) trois salves UL1, UL2, UL3 référencées 81, 82, 83 à destination des stations de base. Un premier intervalle de silence ΔT0 800 sépare la salve DL 80 de la salve UL1 81. Le premier intervalle de silence ΔT0 s'étend de la fin de la salve DL 80 au début de la salve UL1 81. Ce premier intervalle de silence permet notamment à la station de base de passer d'un mode transmission à un mode réception et permet au terminal mobile de passer d'un mode réception à un mode émission. Un deuxième intervalle de silence ΔT1 801 sépare la salve UL1 81 de la salve UL2 82. Le deuxième intervalle de silence ΔT1 s'étend de la fin de la salve UL1 81 au début de la salve UL2 82. Un troisième intervalle de silence ΔT2 802 sépare la salve UL2 82 de la salve UL3 83. Le troisième intervalle de silence ΔT2 s'étend de la fin de la salve UL2 82 au début de la salve UL3 83. Les deuxième et troisième intervalles ΔT1 et ΔT2 correspondent à la durée nécessaire à une station de base pour passer de la réception d'une salve UL1 à une autre salve consécutive UL2. De façon connue de l'homme du métier, ces valeurs d'intervalle ΔT1 et ΔT2 sont liés au matériel de la station de base. Enfin, un quatrième intervalle de silence ΔT3 803 sépare la salve UL3 83 de la salve DL 84 formant le début de la trame suivante. Le quatrième intervalle de silence ΔT3 s'étend de la fin de la salve UL3 83 au début de la salve DL 84. Ce quatrième intervalle de silence permet notamment à une station de base de passer d'un mode réception à un mode transmission et permet au terminal mobile de passer d'un mode émission à un mode réception. Les trois salves UL1, UL2 et UL3 reçues par la ou les stations de base ont avantageusement été émises par trois terminaux mobiles en communication avec les stations de base.

Selon une première variante, le premier intervalle de silence ΔT0 est fonction du décalage temporel de réception estimé pour une station de base, par exemple une station de base élue comme station de référence pour le terminal mobile. Le décalage temporel de réception pour cette station de base communiquant avec le terminal mobile est estimée à partir de l'heure de réception réelle d'un deuxième signal émis par le terminal mobile et corrigé par la prise en compte du premier décalage temporel et à partir d'une heure de référence de réception du deuxième signal, l'heure de référence étant l'heure théorique à laquelle la réception du deuxième signal est attendue par la pluralité de stations de base du réseau après prise en compte par le terminal mobile du premier décalage temporel pour l'émission du deuxième signal. L'heure de réception réelle du deuxième signal ne correspond pas exactement à l'heure de référence du fait par exemple de la mobilité du terminal mobile ou d'une variation des conditions de propagation (par exemple apparition d'un obstacle). Par exemple, lorsque le terminal mobile se rapproche de la station de base d'une distance d, le deuxième signal est reçu par la station de base avec une avance proportionnelle à deux fois le temps de propagation nécessaire pour parcourir la distance d. Pour laisser à la station de base un intervalle de silence suffisamment long pour passer d'un mode transmission à un mode réception, c'est-à-dire pour que ΔT0 respecte le TTG (de l'anglais « Transmit/receive Transition Gap » ou en français « Intervalle de transition transmission/réception », notamment défini dans le standard IEEE 802.16e) de la station de base, l'intervalle de silence ΔT0 est augmenté de deux fois le temps de propagation nécessaire pour parcourir la distance d (cette augmentation de la valeur de ΔT0 correspond au deuxième décalage temporel de réception du deuxième signal par la station de base). Par exemple, lorsque le terminal mobile s'éloigne de la station de base d'une distance d, le deuxième signal est reçu par la station de base avec un retard proportionnel à deux fois le temps de propagation nécessaire pour parcourir la distance d. Pour laisser à la station de base un intervalle de silence suffisamment long pour passer d'un mode de réception d'une première salve UL1 à une deuxième salve UL2, c'est-à-dire pour que ΔT1 respecte le SSTG (de l'anglais « Subscriber Station Transition Gap » ou en français « Intervalle de transition de station mobile », défini notamment dans le standard IEEE 802.16e) de la station de base, l'intervalle de silence ΔT1 est augmenté de deux fois le temps de propagation nécessaire pour parcourir la distance d (cette augmentation de la valeur de ΔT1 correspond au deuxième décalage temporel de réception du deuxième signal par la station de base). Dans le cas où deux stations de base recevant le deuxième signal sont sélectionnées par le réseau pour traiter le deuxième signal émis par le terminal mobile, pour que ΔT0 respecte le TTG ou ΔT1 respecte le SSTG des deux stations de base, l'intervalle de silence ΔT0 et/ou l'intervalle de silence ΔT1 est augmenté du maximum des deuxièmes décalages temporel de réception du deuxième signal de chacune des deux stations de base. Le même raisonnement s'applique pour la détermination de ΔT2 et ΔT3. L'avantage offert par cette première variante est que les intervalles de silence sont minimaux et qu'en conséquence les pertes de bande passante liées à ces silences sont également minimales.

Selon une deuxième variante, le premier décalage temporel appliqué à l'émission d'un deuxième signal par le terminal mobile est basé sur l'estimation du décalage de réception d'un premier signal par la station de base la plus proche du terminal mobile. Le même raisonnement s'applique à chacun des terminaux mobiles du réseau, en l'occurrence au trois terminaux mobiles émettent les salves UL1, UL2 et UL3 de la figure 8. Dans ce cas, un deuxième signal émis par un des terminaux mobiles est reçu par chacune des stations de base soit à l'heure de référence (pour la station de base la plus proche du terminal mobile), soit avec un retard (pour les stations de base les plus éloignées du terminal mobile). Les deuxièmes signaux émis n'étant jamais reçus avant l'heure de référence des stations de base, il suffit d'augmenter les intervalles de silence ΔT1, ΔT2 et ΔT3 suivant les salves UL1, UL2 et UL3 d'une durée égale au maximum des retards de réception de chacune de ces salves. L'intervalle de silence ΔT0 garde une durée égale au TTG. L'avantage offert par cette variante est que l'utilisation de la bande passante est optimale par une gestion optimale des silences.

Selon une troisième variante, la durée ajoutée à chacun des intervalles de silence ΔT0, ΔT1, ΔT2 et ΔT3 est égale au maximum de deux fois le temps de propagation d'un signal émis par un terminal mobile se trouvant en limite de couverture d'une cellule formée par les stations de base. L'avantage de cette variante est la simplicité de mise en oeuvre lié à un calcul simple des silences. Dans cette variante, les intervalles de silence sont avantageusement paramétrés de manière constante une fois le réseau de stations de base établi.

Selon un exemple de mise en oeuvre avantageux de l'invention, les étapes d'estimation d'un premier décalage temporel, d'émission d'une information représentative du premier décalage temporel, d'élection d'une station de base, d'estimation d'un deuxième décalage temporel, de réception d'une information représentative du deuxième décalage temporel et de réception d'une information sur un intervalle de silence sont réitérées dans leur totalité. Selon une variante, seule une partie des étapes énumérées ci-dessus est réitérée. Avantageusement, la réitération des étapes ou d'une partie d'entre elles est conditionnée par un ou plusieurs paramètres appartenant au groupe de paramètres suivant :
- intervalle de temps : la réitération des étapes est faite à intervalles de temps réguliers, de manière cyclique ;
- requête d'un terminal mobile : la réitération des étapes est faite sur requête d'un terminal mobile émettant une requête pour que soit réitérée tout ou partie des étapes ; selon une variante, cette requête fait suite à une réception d'un signal émis par une ou plusieurs stations de base et dont la qualité ou la puissance de réception n'est pas optimale ; selon une variante, cette requête fait suite à une réception d'un signal émis par une ou plusieurs stations de base et dont la qualité ou la puissance de réception est inférieure à une valeur seuil ;
- requête d'une station de base : la réitération des étapes est faite sur requête d'une station de base émettant une requête pour que soit réitérée tout ou partie des étapes ; selon une variante, cette requête fait suite à une réception d'un signal émis par au moins un terminal mobile et dont la qualité ou la puissance de réception n'est pas optimale ; selon une variante, cette requête fait suite à une réception d'un signal émis par au moins un terminal mobile et dont la qualité ou la puissance de réception est inférieure à une valeur seuil ; selon une autre variante, cette requête fait suite à une réception d'un signal émis par au moins un terminal mobile et dont la qualité ou la puissance de réception est supérieure à une valeur seuil, par exemple pour une station de base différente de la station de base de référence ;
- requête d'un élément de gestion du réseau : la réitération des étapes est faite sur requête d'une station maître ou d'un serveur de gestion du réseau pour que soit réitérée tout ou partie des étapes ;
   - valeur seuil : la réitération des étapes est faite lorsque la différence entre l'heure de réception réelle par au moins une station de base d'un signal émis par le terminal mobile et l'heure de référence corrigée du deuxième décalage temporel (c'est-à-dire l'heure de réception théorique du signal émis par les stations de base) est supérieure à une valeur seuil déterminée (par exemple 100 ns ou 1 µs) ; et
- allocation de stations de base au terminal mobile : lorsque l'allocation des stations de base communiquant avec un terminal mobile est modifiée, c'est-à-dire lorsqu'une nouvelle station de base entre en communication avec le terminal mobile ou lorsqu'une station de base communiquant avec le terminal mobile ne communique plus avec lui, par exemple suite au déplacement du terminal mobile, la réitération des étapes ou d'une partie d'entre elle est réalisée.
Selon une variante, le groupe de paramètres ne comprend qu'un seul ou deux ou trois ou quatre des paramètres listés ci-dessus. Selon une autre variante, le premier paramètre est une combinaison d'au moins deux des paramètres du groupe de paramètres définis ci-dessus.

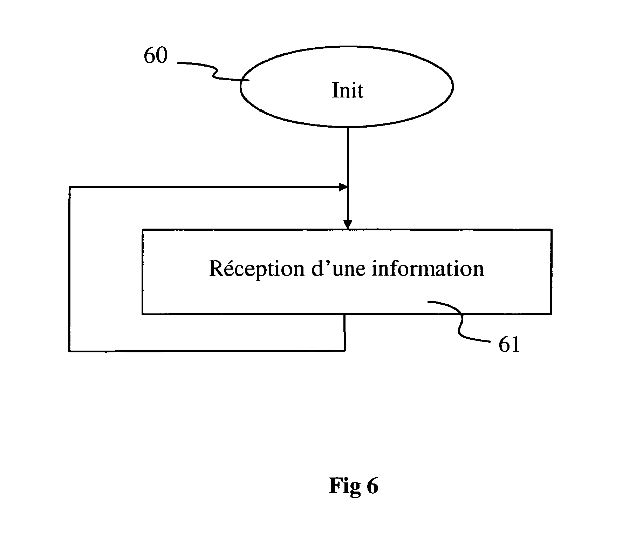

La **figure 6** illustre un procédé de réception mis en oeuvre dans un terminal mobile du système 1, selon un exemple de mise en oeuvre non limitatif particulièrement avantageux de l'invention.

Au cours d'une étape d'initialisation 60, les différents paramètres du terminal mobile sont mis à jour. En particulier, les paramètres correspondant aux signaux à émettre ou à recevoir et aux sous-porteuses correspondantes sont initialisés d'une manière quelconque (par exemple suite à la réception de messages d'initialisation émis par une des stations de base, dite station maître ou par un serveur non représenté du système 1, ou encore par des commandes d'un opérateur).

Puis, au cours d'une étape 61, le terminal mobile 10 reçoit d'au moins une des stations de base 11 à 13 une information représentative d'un premier décalage temporel qui est fonction d'au moins une heure de réception par au moins une station de base d'un premier signal (ou d'une première salve) émis(e) par le terminal mobile. Le premier décalage temporel est à appliquer à l'émission par le terminal mobile 10 d'un deuxième signal (ou d'une deuxième salve) suivant le premier signal utilisé pour l'estimation des décalages de réception par les stations de base. Le premier signal émis par le terminal mobile est émis à destination de l'ensemble des stations de base 11 à 13. Une ou plusieurs stations de base ayant reçu ce premier signal mesurent l'heure de réception réelle de ce premier signal. Ces mesures sont alors transmises à une station maître ou à un serveur de gestion du réseau qui les compare à une heure de référence, qui correspond à l'heure théorique à laquelle était attendu la réception du premier signal par les stations de base. Cette comparaison fournit un décalage de réception pour chacune des stations de base. Selon une variante, le premier décalage temporel est estimé en fonction du décalage de réception d'une station de base, par exemple la plus proche du terminal mobile ou la station de base émettant un signal avec la plus forte puissance d'émission. Selon une autre variante, le premier décalage temporel est estimé en fonction des décalages de réception correspondant à deux stations de base, par exemple les deux stations de base les plus proches du terminal mobile ou les deux stations de base dont le débit disponible est le plus élevé. L'information représentative du premier décalage temporel est avantageusement transmis au terminal mobile par une station de base, par exemple la station de base la plus proche du terminal mobile et dont le décalage de réception du premier signal émis par le terminal mobile est le plus petit. Selon une variante, l'information représentative du premier décalage temporel est transmise par deux stations de base de manière synchronisée, par exemple les deux stations de base les plus proches du terminal mobile. Selon une autre variante, l'information représentative du premier décalage temporel est transmise par l'ensemble des stations de base ayant reçu le premier signal émis par le terminal mobile, de manière synchronisée.

Bien entendu, l'invention ne se limite pas aux modes de réalisation décrits précédemment.

En particulier, l'invention n'est pas limitée à un système comprenant trois stations de base et un terminal mobile mais s'étend également à un système comprenant au moins deux stations de base et une pluralité de terminaux mobiles.

Avantageusement, le réseau formé de la pluralité de stations de base et de la pluralité de terminaux mobiles forme un réseau SFN (de l'anglais « Single Frequency Network » ou « réseau à fréquence unique » en français), les stations de base transmettant de manière synchronisée un même signal OFDM. De cette manière, un terminal mobile reçoit une combinaison des signaux en provenance de plusieurs émetteurs et décode la combinaison ainsi obtenue en utilisant les propriétés propres à l'OFDM, d'annulation des interférences inter-symboles. Les stations de base forment ainsi un réseau synchronisé émettant un même contenu à une même fréquence, c'est-à-dire que les émetteurs opèrent sur une fréquence unique (c'est-à-dire avec un écart en fréquence négligeable au regard du système OFDM considéré (typiquement inférieur à 1 Hz pour un système de type DVB-T)) de manière synchrone (c'est-à-dire avec un écart temporel négligeable (par exemple moins d'1 µs) et sans glissement temporel d'un signal émis par un émetteur par rapport à un autre signal émis par un autre émetteur), la fréquence d'émission étant synchronisée sur les différents émetteurs, par exemple par la réception d'une fréquence de référence donnée par un élément externe (par exemple par satellite GPS (de l'anglais « Global Positioning System » ou « Système de localisation globale » en français) ou station terrestre de diffusion d'une heure ou fréquence de référence). Chaque terminal mobile émet à destination de la pluralité de stations de base des mêmes signaux.

Selon une variante, une partie de la pluralité de base est assignée à chaque terminal mobile formant ainsi une cellule comprenant plusieurs stations de base. Les stations de base ainsi assignées au terminal mobile sont chargées de la transmission des données destinées au terminal mobile et sont également chargées de la réception et du décodage des données émises par le terminal mobile. L'assignation des stations de base au terminal mobile évolue dans le temps en fonction par exemple du déplacement du terminal mobile. Selon une variante, l'assignation des stations de base au terminal mobile se fait en fonction des décalages de réception correspondant à chaque station de base estimés à partir d'un premier signal émis par le terminal mobile, par exemple lorsque le terminal mobile souhaite rentrer dans le réseau. Les stations de base dont le décalage de réception du premier signal est inférieur à une valeur seuil déterminée sont avantageusement assignées au terminal mobile.

Selon une autre variante, le procédé d'émission comprend une étape de localisation d'un ou plusieurs terminaux mobiles. A partir des mesures de décalage de réception de signaux émis par le ou les terminaux mobiles réalisées par les stations de base, il est possible de mesurer la distance relative entre un terminal mobile et chaque station de base ayant reçu le signal émis par le terminal mobile. Si trois stations de base ou plus ont reçu le signal émis par le terminal mobile et mesuré le décalage de réception de ce signal par rapport à une heure de référence, une localisation précise du terminal mobile est possible par toute méthode connue de l'homme du métier, par exemple par triangularisation.

## Revendications

1. Procédé d'émission dans un réseau sans fil, ledit réseau comprenant une pluralité de stations de base (11, 12, 13) et au moins un terminal mobile (10), lesdites stations de bases (11, 12, 13) étant configurées pour transmettre des mêmes données de manière synchronisée et à une même fréquence à destination du au moins un terminal mobile, **caractérisé en ce que**, au moins un même premier signal étant émis par un terminal mobile (10) à destination de la pluralité de stations de base (11, 12, 13) en utilisant un même canal physique, le procédé comprend une étape d'émission (42) d'une information représentative d'un premier décalage temporel à destination du terminal mobile, ledit premier décalage étant fonction d'au moins une heure de réception du au moins un même premier signal par au moins une station de base.

2. Procédé selon la revendication 1, **caractérisé en ce que** ledit premier décalage est fonction d'au moins deux heures de réception du au moins un premier signal par au moins deux stations de base.

3. Procédé selon la revendication 1, **caractérisé en ce que** ledit premier décalage est fonction de la différence entre la au moins une heure de réception du au moins un premier signal par la au moins une station de base et une heure de référence, ledit premier décalage étant à appliquer à une émission d'au moins un même deuxième signal par ledit terminal mobile à destination de la pluralité de stations de base.

4. Procédé selon la revendication 1, **caractérisé en ce qu'**une information représentative d'un décalage temporel est associée à chaque station de base de la pluralité de stations de base (11, 12, 13), chaque information représentative d'un décalage temporel étant déterminée en fonction de l'heure de réception du au moins un premier signal par la station de base correspondante et une heure de référence, ledit premier décalage étant choisi comme prenant la plus petite des valeurs associées aux informations représentatives d'un décalage temporel.

5. Procédé selon l'une des revendications 1 à 3, **caractérisé en ce que** ledit premier décalage est fonction d'au moins un premier paramètre appartenant au groupe comprenant :
- une puissance de signal reçu par au moins une station de base de ladite pluralité ;
- une qualité de liaison entre au moins une station de base de ladite pluralité et le terminal mobile ; et
- un débit disponible d'au moins une station de base de ladite pluralité.

6. Procédé selon l'une des revendications 1 à 5, **caractérisé en ce que** le procédé comprend une étape d'élection (53) d'au moins une station de base de référence pour ledit terminal mobile parmi la pluralité de stations de base en fonction d'au moins un critère déterminé appartenant au groupe comprenant :
- un décalage temporel ;
- une puissance de signal reçu par au moins une station de base de ladite pluralité ;
- une qualité de liaison entre au moins une station de base de ladite pluralité et le terminal mobile ; et
- un débit disponible d'au moins une station de base de ladite pluralité.

7. Procédé selon l'une des revendications 1 à 6, **caractérisé en ce que** le procédé comprend une étape d'estimation (54) d'au moins un deuxième décalage temporel pour la réception du au moins un deuxième signal par au moins une station de base.

8. Procédé selon la revendication 7, **caractérisé en ce que** le procédé comprend une étape de réception (55), par au moins une station de base, d'au moins une information représentative du deuxième décalage temporel pour la réception du au moins un deuxième signal par ladite au moins une station de base.

9. Procédé selon l'une des revendications 7 à 8, **caractérisé en ce que** le procédé comprend une étape de réception (56), par au moins une station de base, d'au moins une information représentative d'un intervalle de silence, ledit intervalle de silence étant fonction du au moins un deuxième décalage temporel.

10. Procédé selon la revendication 9, **caractérisé en ce que** ledit intervalle de silence est fonction du maximum d'au moins deux deuxièmes décalages temporels associés chacun à une station de base.

11. Procédé selon l'une des revendications 1 à 10, **caractérisé en ce que** les étapes du procédé sont réitérées en fonction d'au moins un deuxième paramètre.

12. Procédé de réception d'un signal dans un réseau sans fil, ledit réseau comprenant une pluralité de stations de base (11, 12, 13) et au moins un terminal mobile (10), lesdites stations de bases (11, 12, 13) étant configurées pour transmettre des mêmes données de manière synchronisée et à une même fréquence à destination du au moins un terminal mobile, **caractérisé en ce que**, au moins un même premier signal étant émis par un terminal mobile à destination de la pluralité de stations de base en utilisant un même canal physique, le procédé comprend une étape de réception (61), par ledit terminal mobile (10), d'une information représentative d'un premier décalage temporel, ledit premier décalage étant fonction d'au moins une heure de réception du au moins un premier signal par au moins une station de base.

13. Procédé selon la revendication 12, **caractérisé en ce que** ledit premier décalage est fonction d'au moins deux heures de réception du au moins un premier signal par au moins deux stations de base.

14. Procédé selon l'une des revendications 12 à 13, **caractérisé en ce que** ledit premier décalage est fonction de la différence entre la au moins une heure de réception du au moins un premier signal par la au moins une station de base et une heure de référence, ledit premier décalage étant à appliquer à l'émission d'au moins un même deuxième signal par ledit terminal mobile à destination de la pluralité de stations de base.

## Claims

1. Transmission method in a wireless network, said network comprising a plurality of base stations (11, 12, 13) and at least one mobile terminal (10), said base stations (11, 12, 13) being configured to transmit the same data in a synchronised manner and at a same frequency to the at least one mobile terminal, **characterised in that**, at least one same first signal being sent by a mobile terminal (10) to the plurality of base stations (11, 12, 13) by using a same physical channel, the method comprises a emission step (42) of information representative of a first time shift to the mobile terminal, said first time shift being dependent on at least one reception time of the at least one first signal by at least one base station.

2. Method according to claim 1, **characterized in that** said first shift is dependent on the at least two reception times of the at least one first signal by at least two base stations.

3. Method according to claim 1, **characterized in that** said first shift is dependent on the difference between the at least one reception time of the at least one first signal by the at least one base station and a reference time, said first shift being to apply to an emission of at least one same second signal by said mobile terminal to the plurality of base stations.

4. Method according to claim 1, **characterized in that** a information representative of a time shift is associated with each base station of the plurality of base stations (11, 12, 13), each information representative of a time shift being determined according to the reception time of the at least one first signal by the corresponding base station and a reference time, said first shift being chosen as taking the smallest of values associated with the information representative of a time shift.

5. Method according to claims 1 to 3, **characterized in that** said first shift is dependent on the at least one first parameter belonging to the group comprising:
- a signal power received by at least one base station of said plurality,
- a link quality between at least one base station of said plurality and the mobile terminal, and
- a bitrate available from at least one base station of said plurality.

6. Method according to claims 1 to 5, **characterized in that** the method comprises an election step (53) of at least one reference base station for said mobile terminal among the plurality of base stations according to at least one determined criteria belonging to the group comprising:
- a time shift,
- a signal power received by at least one base station of said plurality,
- a link quality between at least one base station of said plurality and the mobile terminal, and
- a bitrate available from at least one base station of said plurality.

7. Method according to claims 1 to 5, **characterized in that** the method comprises an estimation step (54) of at least one second time shift for the reception of the at least one second signal by at least one base station.

8. Method according to claim 7, **characterized in that** the method comprises a reception step (55) , by at least one base station, of at least one information representative of the second time shift for the reception of the at least one second signal by said at least one base station.

9. Method according to claims 7 to 8, **characterized in that** the method comprises a reception step (56) , by at least one base station, of at least one information representative of a silence interval, said silence interval being dependent on the at least one second time shift.

10. Method according to claim 9, **characterized in that** said silence interval is dependent on the maximum of the at least two second time shifts each associated with a base station.

11. Method according to claims 1 to 10, **characterized in that** the steps of the method are reiterated according to at least one second parameter.

12. Method for receiving a signal in a wireless network, said network comprising a plurality of base stations (11, 12, 13) and at least one mobile terminal (10), said base stations (11, 12, 13) being configured to transmit the same data in a synchronised manner and at a same frequency to the at least one mobile terminal, **characterised in that**, at least one same first signal being sent by a mobile terminal to the plurality of base stations by using a same physical channel, the method comprises a reception step (61), by said mobile terminal (10), of information representative of a first time shift, said first time shift being dependent on at least one reception time of the at least one first signal by at least one base station.

13. Method according to claim 12, **characterized in that** said first shift is dependent on the at least two reception times of the at least one first signal by at least two base stations.

14. Method according to one of claims 12 to 13, **characterized in that** said first shift is dependent on the difference between the at least one reception time of the at least one first signal by the at least one base station and a reference time, said first shift being to apply to an emission of at least one same second signal by said mobile terminal to the plurality of base stations.

## Patentansprüche

1. Sendungsverfahren in einem drahtlosen Netzwerk, wobei das Netzwerk eine Vielzahl von Basisstationen (11, 12, 13) und mindestens ein mobiles Endgerät (10) umfasst, wobei die Basisstationen (11, 12, 13) ausgebildet sind, um gleiche Daten synchronisiert und mit einer gleichen Frequenz an das mindestens eine mobile Endgerät zu übertragen, **dadurch gekennzeichnet, dass** das Verfahren, wobei das gleiche, mindestens eine erste Signal von einem mobilen Endgerät (10) an die Vielzahl von Basisstationen (11, 12, 13) gesendet wird, indem ein gleicher physikalischer Kanal verwendet wird, einen Sendungsschritt (42) einer Information umfasst, die eine erste zeitliche Verschiebung zu dem mobilen Endgerät darstellt, wobei die erste Verschiebung eine Funktion von mindestens einem Empfangszeitpunkt des gleichen, mindestens einen ersten Signales durch mindestens eine Basisstation ist.

2. Verfahren nach Anspruch 1, **dadurch gekennzeichnet, dass** die erste Verschiebung eine Funktion von mindestens zwei Empfangszeitpunkten des mindestens einen ersten Signales durch mindestens zwei Basisstationen ist.

3. Verfahren nach Anspruch 1, **dadurch gekennzeichnet, dass** die erste Verschiebung eine Funktion des Unterschiedes zwischen dem mindestens einen Empfangszeitpunkt des mindestens einen ersten Signales durch die mindestens eine Basisstation und einem Referenzzeitpunkt ist, wobei die erste Verschiebung auf eine Sendung von dem gleichen, mindestens einen zweiten Signal durch das mobile Endgerät an die Vielzahl von Basisstationen anzuwenden ist.

4. Verfahren nach Anspruch 1, **dadurch gekennzeichnet, dass** eine Information, die eine zeitliche Verschiebung darstellt, jeder Basisstation aus der Vielzahl von Basisstationen (11, 12, 13) zugeordnet wird, wobei jede Information, die eine zeitliche Verschiebung darstellt, abhängig von dem Empfangszeitpunkt des mindestens einen ersten Signales durch die entsprechende Basisstation und einem Referenzzeitpunkt bestimmt wird, wobei die erste Verschiebung so ausgewählt wird, dass sie den kleinsten der Werte annimmt, der den Informationen zugeordnet wird, die eine zeitliche Verschiebung darstellen.

5. Verfahren nach einem der Ansprüche 1 bis 3, **dadurch gekennzeichnet, dass** die erste Verschiebung eine Funktion von mindestens einem ersten Parameter ist, der zu der Gruppe gehört, die umfasst:
- eine Leistung eines Signales, das von mindestens einer Basisstation aus der Vielzahl empfangen wird;
- eine Verbindungsqualität zwischen mindestens einer Basisstation aus der Vielzahl und dem mobilen Endgerät; und
- eine Geschwindigkeit, die an mindestens einer Basisstation aus der Vielzahl verfügbar ist.

6. Verfahren nach einem der Ansprüche 1 bis 5, **dadurch gekennzeichnet, dass** das Verfahren einen Auswahlschritt (53) von mindestens einer Referenz-Basisstation für das mobile Endgerät unter der Vielzahl von Basisstationen abhängig von mindestens einem bestimmten Kriterium umfasst, das zu der Gruppe gehört, die umfasst:
- eine zeitliche Verschiebung;
- eine Leistung eines Signales, das von mindestens einer der Basisstation aus der Vielzahl empfangen wird;
- eine Verbindungsqualität zwischen mindestens einer Basisstation aus der Vielzahl und dem mobilen Endgerät; und
- eine Geschwindigkeit, die an mindestens einer Basisstation aus der Vielzahl verfügbar ist.

7. Verfahren nach einem der Ansprüche 1 bis 6, **dadurch gekennzeichnet, dass** das Verfahren einen Schätzungsschritt (54) mindestens einer zweiten zeitlichen Verschiebung für den Empfang des mindestens einen zweiten Signales durch mindestens eine Basisstation umfasst.

8. Verfahren nach Anspruch 7, **dadurch gekennzeichnet, dass** das Verfahren einen Empfangsschritt (55), durch mindestens eine Basisstation, der mindestens einen Information umfasst, welche die zweite zeitliche Verschiebung für den Empfang des mindestens einen zweiten Signales durch die mindestens eine Basisstation darstellt.

9. Verfahren nach einem der Ansprüche 7 bis 8, **dadurch gekennzeichnet, dass** das Verfahren einen Empfangsschritt (56), durch mindestens eine Basisstation, von mindestens einer Information umfasst, die eine signalfreie Pause darstellt, wobei die signalfreie Pause eine Funktion der mindestens einen zweiten zeitlichen Verschiebung ist.

10. Verfahren nach Anspruch 9, **dadurch gekennzeichnet, dass** die signalfreie Pause eine Funktion des Maximums von mindestens zwei zweiten zeitlichen Verschiebungen ist, die jeweils einer Basisstation zugeordnet werden.

11. Verfahren nach einem der Ansprüche 1 bis 10, **dadurch gekennzeichnet, dass** die Schritte des Verfahrens in Abhängigkeit von mindestens einem zweiten Parameter wiederholt werden.

12. Empfangsverfahren eines Signales in einem drahtlosen Netzwerk, wobei das Netzwerk eine Vielzahl von Basisstationen (11, 12, 13) und mindestens ein mobiles Endgerät (10) umfasst, wobei die Basisstationen (11, 12, 13) ausgebildet sind, um gleiche Daten synchronisiert und mit einer gleichen Frequenz an das mindestens eine mobile Endgerät zu übertragen, **dadurch gekennzeichnet, dass** das Verfahren, wobei das gleiche, mindestens eine erste Signal von einem mobilen Endgerät (10) an die Vielzahl von Basisstationen gesendet wird, indem ein gleicher physikalischer Kanal verwendet wird, einen Empfangsschritt (61), durch das mobile Endgerät (10), einer Information umfasst, die eine erste zeitliche Verschiebung darstellt, wobei die erste Verschiebung eine Funktion von mindestens einem Empfangszeitpunkt des mindestens einen ersten Signales durch mindestens eine Basisstation ist.

13. Verfahren nach Anspruch 12, **dadurch gekennzeichnet, dass** die erste Verschiebung eine Funktion von mindestens zwei Empfangszeitpunkten des mindestens einen ersten Signales durch mindestens zwei Basisstationen ist.

14. Verfahren nach einem der Ansprüche 12 bis 13, **dadurch gekennzeichnet, dass** die erste Verschiebung eine Funktion des Unterschiedes zwischen dem mindestens einen Empfangszeitpunkt des mindestens einen ersten Signales durch mindestens eine Basisstation und einem Referenzzeitpunkt ist, wobei die erste Verschiebung auf eine Sendung von dem gleichen, mindestens einen zweiten Signal durch das mobile Endgerät an die Vielzahl von Basisstationen anzuwenden ist.
